(19) Europäisches Patentamt
European Patent Office
Office européen des brevets

(11) Veröffentlichungsnummer : **0 153 599**
**B1**

(12) **EUROPÄISCHE PATENTSCHRIFT**

(45) Veröffentlichungstag der Patentschrift : **02.03.88**

(21) Anmeldenummer : **85100910.0**

(22) Anmeldetag : **30.01.85**

(51) Int. Cl.⁴ : **C 09 B 62/503**, C 07 C147/12, C 07 C149/42, D 06 P 3/10, D 06 P 3/66

(54) **Triphendioxazin-vinylsulfon-Farbstoffe.**

(30) Priorität : **11.02.84 DE 3404856**
**31.10.84 DE 3439756**

(43) Veröffentlichungstag der Anmeldung : **04.09.85 Patentblatt 85/36**

(45) Bekanntmachung des Hinweises auf die Patenterteilung : **02.03.88 Patentblatt 88/09**

(84) Benannte Vertragsstaaten : **BE CH DE FR GB IT LI NL**

(56) Entgegenhaltungen :
**FR-A- 2 360 643**
**FR-A- 2 397 443**
**GB-A- 2 059 985**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen 1 (DE)**
Erfinder : **Harms, Wolfgang, Dr.**
**Walter-Flex-Strasse 21**
**D-5090 Leverkusen 1 (DE)**
Erfinder : **Herd, Karl Josef, Dr.**
**Am Gartenfeld 66**
**D-5068 Odenthal (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 153 599 B1

Jouve, 18, rue St-Denis, 75001 Paris, France

**Beschreibung**

Gegenstand der vorliegenden Erfindung sind Triphendioxazinfarbstoffe der allgemeinen Formel

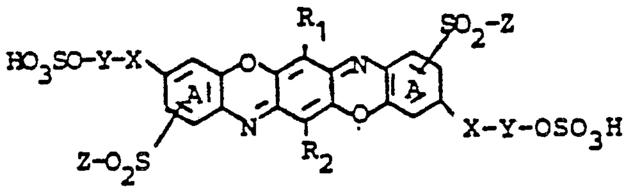

(I)

worin

$R_1$, $R_2$ = H, F, Cl, Br, $C_1$-$C_4$-Alkyl, $C_1$-$C_4$-Alkoxy, ggfs. substituiertes Phenoxy, Acylamino, ggfs. substituiertes Carbonamido,

X = $NR_3$, O, S

$R_3$ = H, gegebenenfalls substituiertes $C_1$-$C_4$-Alkyl,

Y = $C_2$-$C_6$-Alkylen, gegebenenfalls substituiert oder durch Heteroatome in der Alkylenkette unterbrochen,

Z = —CH=$CH_2$ oder —$CH_2$—$CH_2$—W worin

W = ein unter Bildung der Gruppe —CH=$CH_2$ abspaltbarer Rest, beispielsweise —$OSO_3H$, —$SSO_3H$ oder —$OPO_3H_2$, —O-Acyl, insbesondere —O—$C_1$-$C_4$-Alkylcarbonyl, wobei die Ringe A gegebenenfalls weitere übliche Substituenten aufweisen können.

Die Reste —$SO_2Z$ stehen dabei vorzugsweise in o-Stellung zu der Gruppe —X—Y—$OSO_3H$.

Bevorzugte Farbstoffe der Formel (I) sind solche der Formel

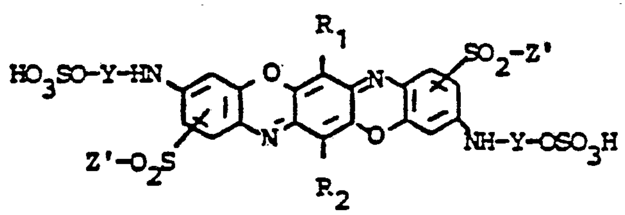

(II)

worin

$R_1$, $R_2$ und Y die oben angegebene Bedeutung haben und

Z' —$CH_2$—$CH_2$—$OSO_3H$ oder —CH=$CH_2$,

weiterhin solche der Formel

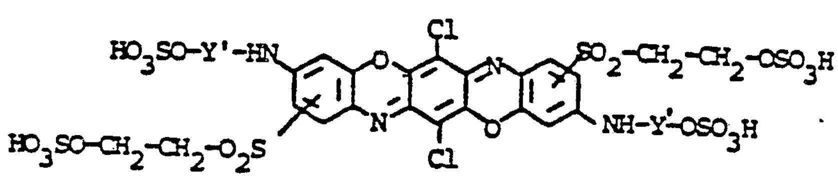

(III)

worin Y' $C_2$-$C_4$-Alkylen bedeutet.

Beispiele für Substituenten $R_1$, $R_2$ sind H, F, Cl, Br, $C_1$-$C_4$-Alkyl, $C_1$-$C_4$-Alkoxy, Aryloxy, insbesondere gegebenenfalls substituiertes Phenoxy, Acylamino, insbesondere $C_1$-$C_4$-Alkylcarbonylamino und gegebenenfalls substituiertes Phenylcarbonylamino, Acetyl- oder Benzoylamino sowie gegebenenfalls substituiertes Carbonamido.

Beispiele für $R_3$ sind Methyl, Ethyl, 1-Propyl, 2-Propyl, 1-Butyl, 2-Butyl, 2-Methylpropyl wobei diese Substituenten beispielsweise noch durch wasserlöslichmachende oder hydrophile Gruppen wie $SO_3H$, $OSO_3H$, COOH, OH, $OCH_3$ substituiert sein können.

Geeignete Alkylenreste Y sind beispielsweise :

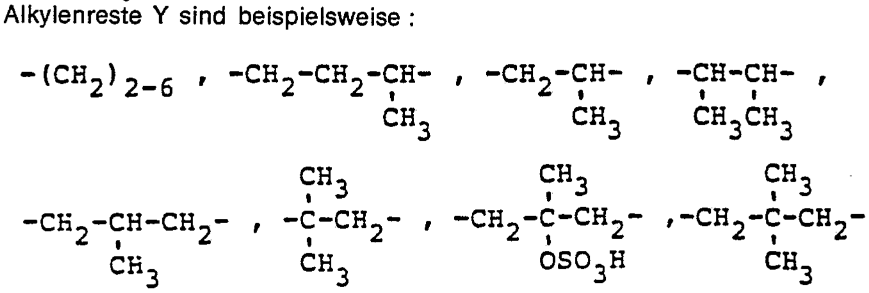

$-CH_2-CH(OSO_3H)-CH_2-$ , $-CH_2-CH(-)-CH_2OSO_3H$ , $-C(CH_3)_2-CH_2-CH-$ ,

$-CH_2-CH_2-O-CH_2-CH_2-$, $-CH_2-CH_2-SO_2-CH_2-CH_2-$ ,

$-CH_2-CH_2-NH-CH_2-CH_2-$ , $-CH_2-CH_2-(O-CH_2-CH_2)_{\overline{1-5}}$ ,

$-CH_2CH_2-S-CH_2CH_2-$ , $-CH_1CH_2-N(CH_3)-CH_2CH_2-$.

Die Herstellung der Verbindungen (I) erfolgt vorzugsweise durch Kondensation von 1,4-Benzochinonen der Formel

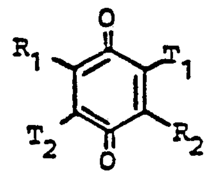

(IV)

worin

$T_1$ und $T_2$ Wasserstoff, F, Cl, Br, O-Alkyl oder O-Aryl bedeuten und

$R_1$ und $R_2$ die oben angegebene Bedeutung haben,

mit Verbindungen der Formel

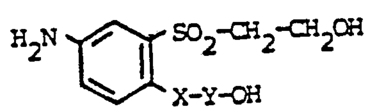

(V)

worin X und Y die oben angegebene Bedeutung haben, zu Verbindungen der Formel

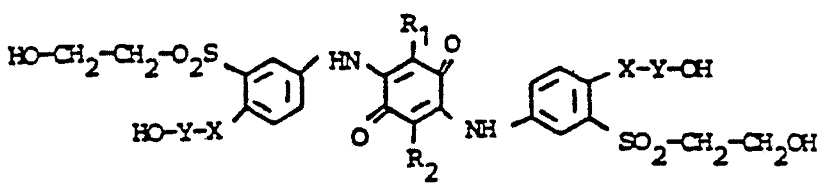

(VI)

worin $R_1$, $R_2$, X und Y die oben angegebene Bedeutung haben und anschließenden Ringschluß in saurem, vorzugsweise stark saurem Medium, wobei die entsprechenden Verbindungen mit den Gruppen $—X—Y—OSO_3H$ und $—SO_2CH_2CH_2OSO_3H$ entstehen, welche nach bekannten Verfahren in die Gruppe $—SO_2—CH{=}CH_2$ bzw. $—SO_2—CH_2CH_2SSO_3H$ und $—SO_2CH_2CH_2OPO_3H_2$ umgewandelt werden können.

Der Ringschluß der Kondensationsprodukte (VI) kann beispielsweise nach Methoden, wie sie in den Deutschen Offenlegungsschriften 2 122 262, 2 124 080, 2 302 382, 2 344 781, 2 503 611, 2 823 828 und in der Britischen Patentschrift 2 019 872 beschrieben sind, erfolgen insbesondere in konzentrierter Schwefelsäure oder vor allem in Oleum mit $SO_3$-Konzentrationen von 1-50 %, bei Temperaturen von 10-80°, gegebenenfalls besonders vorteilhaft unter Zusatz von Oxidationsmitteln wie Kalium- oder Ammoniumperoxidisulfat oder organischen Peroxiden.

Die neuen Farbstoffe geben auf Cellulose- sowie natürlichen und synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilimaterialien insbesondere von Materialien aus nativer und regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um °C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Color Index Hue Indication Chart (Indicator Numbers).

Bevorzugte Aminoverbindungen (V) sind solche der Formel

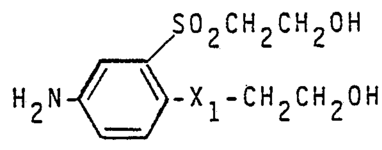

(VII)

wobei $X_1$ = NH, O, S bedeutet.

Ein Verfahren zu deren Herstellung besteht darin, daß man (2-Halogen-5-nitrophenyl) (β-hydroxyethyl) sulfone

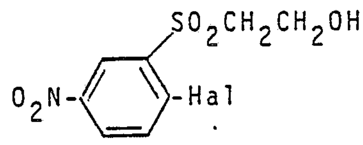

(VIII)

worin Hal = F, Cl, Br, J, die durch Ethoxylierung von 2-Halogen-5-nitrobenzolsulfinsäuren unter neutralen wäßrigen Bedingungen zugänglich sind, mit Verbindungen der Struktur HX—Y—OH (IX) in der Wärme, ggf. unter Druck, unter H-Hal-Abspaltung umsetzt und die dabei resultierenden Nitrosulfone der Formel

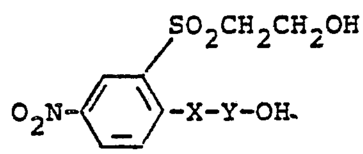

(X)

anschließend, gegebenenfalls ohne Zwischenisolierung, zu (V) reduziert.

Die Kondensation mit den nucleophilen Reaktionspartnern (IX) führt man oberhalb 70 °C, am vorteilhaftesten zwischen 75 bis 120°, gegebenenfalls unter Druck, durch. Als Reaktionsmedium kann Wasser, ein organisches wassermischbares Lösungsmittel, z. B. ein Alkohol, DMF, DMSO oder eine Mischung aus beiden dienen. Bei einem Überschuß an HX—Y—OH kann auch auf ein Lösungsmittel verzichtet werden. Zum Abfangen des freiwerdenden Halogenwasserstoffs kann eine Hilfsbase, bspw. ein tertiäres Amin, insbesondere ein Trialkylamin wie Triethylamin, Natriumhydrogencarbonat oder Soda zugesetzt werden oder aber man verwendet beim Einsatz von $HNR^3$—Y—OH die etwa zweifache äquimolare Menge an diesem Hydroxyalkylamin.

Die abschließende Reduktion kann katalytisch, (z. B. Wasserstoff/Katalysator), mit Metall/Säure (z. B. Eisen/Essigsäure) oder mit anderen für aromatische Nitroverbindungen üblichen Reduktionsmitteln erfolgen.

Ein weiteres Verfahren besteht darin, daß man die Alkalisalze der 2-Halogen-5-nitrobenzolsulfinsäure mit Verbindungen HX—Y—OH oberhalb 80 °C in wäßrigem Reaktionsmedium, gegebenenfalls unter Druck, kondensiert und die Kondensationsprodukte

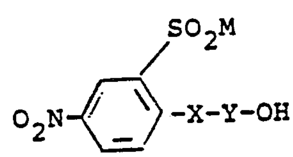

(XI)

M = Li, Na, K

mit Ethylenoxid oder Chlorethanol in der Wärme und unter Druck und neutralen Bedingungen alkyliert. Um den pH-Wert dabei konstant zu halten, wird kontinuierlich eine anorganische Säure, z. B. Schwefelsäure, zudosiert oder aber die Reaktion in phosphatgepufferter Lösung durchgeführt. Die entsprechenden Nitrosulfone (X) werden dann, wie im ersten Darstellungsverfahren aufgeführt, zu den entsprechenden Aminoverbindungen (V) reduziert.

Die Verbindungen (X) sind auch herstellbar, indem man o-substituierte Sulfone der Formel

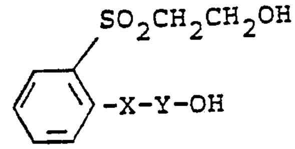

(XII)

zweifach O- und gegebenenfalls N-acyliert, mit Schwefelsäure/Salpetersäure unter relativ schonenden Bedingungen nitriert und abschließend unter saurer Hydrolyse entacyliert (vgl. US-Patent 2 784 204).

Beispiel 1

20,0 g eines Chloranilkondensationsproduktes der Formel

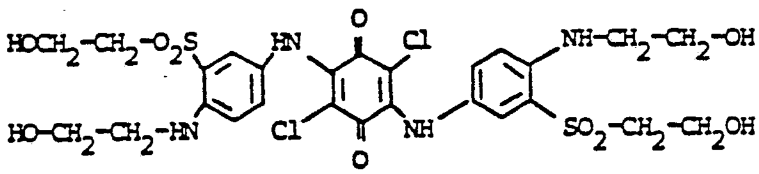

werden bei 10-20° in 50 ml 20 %iges Oleum innerhalb etwa einer Stunde eingetragen. Zur vollständigen Lösung rührt man 30 bis 60 Minuten nach und trägt dann in die dickflüssige Masse 15,6 g Kaliumperoxydisulfat in etwa 45 Minuten bei 20 bis 25° unter leichter Außenkühlung ein. 30 Minuten nach dem Eintragen ist die Reaktion beendet. Man rührt das Reaktionsgemisch in 400 g Eis ein, läßt dann zu der entstandenen blauen Lösung zunächst 2,5 g Trinatriumphosphat in 20 ml Wasser und anschließend etwa 450 ml 4 n Natronlauge unter Kühlung und gutem Rühren zutropfen, bis ein pH-Wert von 4,5 bis 5,0 erreicht ist. Der in Form eines breiigen Niederschlages ausgefallene Farbstoff wird abgesaugt, mit Natriumchloridlösung gewaschen und bei 50° im Umluftschrank getrocknet. Der Farbstoff entspricht der Formel

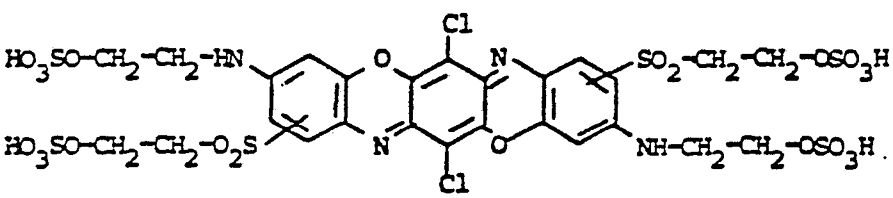

C.I. Indicator Number 13

Er färbt Baumwolle aus langer Flotte bei 40 bis 60° in kräftigen, etwas rotstichigen Blautönen mit ausgezeichneten Echtheitseigenschaften.

Das zu Beginn des Beispiels 1 eingesetzte Chloranil-Kondensationsprodukt wird auf folgende Weise hergestellt :

35 g 5-Nitro-2-β-hydroxyethylaminophenyl-β-hydroxyethylsulfon werden in 200 ml Methanol suspendiert (Autoklav). Nach Zusatz von 2 g Raney-Nickel drückt man 10 bis 20 bar Wasserstoff auf und heizt auf 45°, bis nach weiterem Aufdrücken von Wasserstoff kein Verbrauch mehr erfolgt. Man filtriert die erhaltene Lösung oder Suspension bei 50° vom Nickel ab, wäscht mit Wasser wenig nach und setzt zu dem Filtrat 14,4 g 2,3,5,6-Tetrachlorchinon und 16 g wasserfreies Natriumacetat. Die Mischung wird nun unter Rückfluß 2 Stunden erhitzt, bis kein Tetrachlorchinon mehr nachweisbar ist. Das in Form eines braunen Niederschlages ausgefallene Kondensationsprodukt wird abgesaugt, mit Methanol oder Methanolwasser gewaschen und bei 60° im Umluftschrank getrocknet.

Man kann die nach der katalytischen Reduktion erhaltene Methanollösung auch eindampfen, das zurückbleibende 5-Amino-2-β-hydroxyethylaminophenyl-β-hydroxyethylsulfon in Wasser lösen und bei 45° mit dem Chloranil kondensieren, wobei man den pH-Wert mit 2n-Sodalösung auf 5,5 bis 5,8 hält. Die Kondensation ist unter diesen Bedingungen nach etwa einer Stunde beendet. Man saugt den ebenfalls ausgefallenen braunen Niederschlag ab und wäscht ihn mit Wasser.

Beispiel 2

Führt man in Beispiel 1 den oxidativen Ringschluß statt mit 50 ml 20 %igem Oleum bei 20 bis 25° ohne Zuhilfenahme von Peroxydisulfat in 30 %igem Oleum bei 50° aus, so erhält man nach Isolierung aus dem Reaktionsgemisch einen ähnlichen Farbstoff, der Cellulosefasern in blauen Farbtönen färbt.

Weitere ähnliche blaue Farbstoffe mit der C.I. Indicator Number 13 erhält man, wenn man die in nachfolgender Tabelle aufgeführten 5-Amino-2-(hydroxyalkylamino)-phenyl-β-hydroxyethylsulfone (V) mit den angegebenen 1,4-Benzochinonen (IV) kondensiert und die Kondensationsprodukte in der beschriebenen Weise cyclisiert und sulfatiert.

| Ausgangsverbindungen V | Benzochinon IV |
|---|---|
| 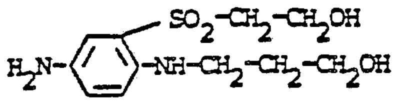 | 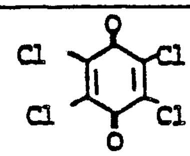 |
| 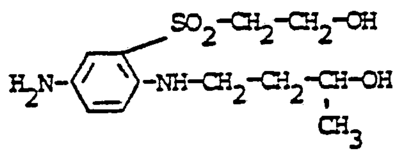 | " |
| 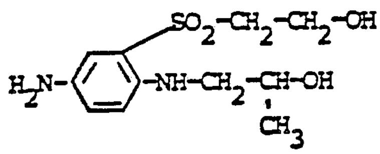 | " |
| 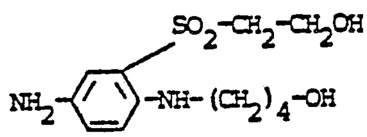 | " |
| 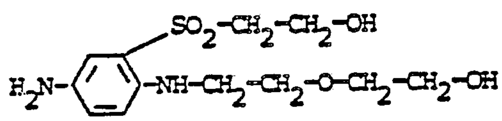 | " |
| 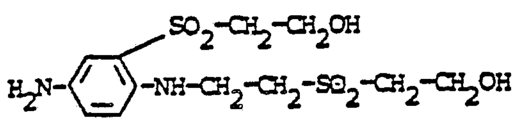 | " |
| 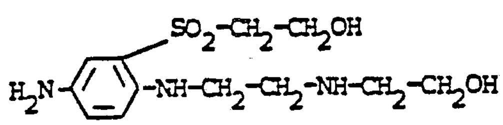 | " |
| 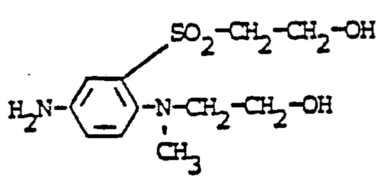 | " |
| 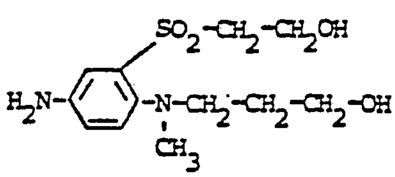 | 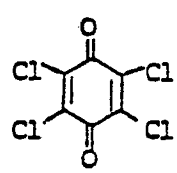 |
| 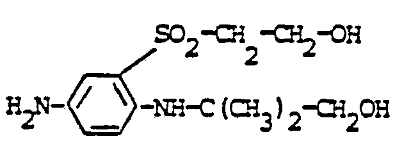 | " |

(Fortsetzung)

| Ausgangsverbindungen V | Benzochinon IV |
|---|---|
| 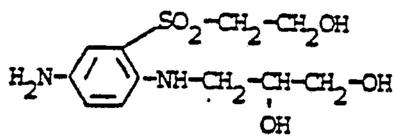 | " |
| 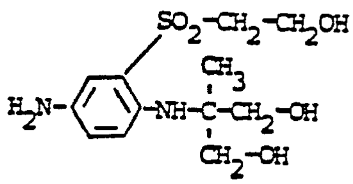 | " |
| 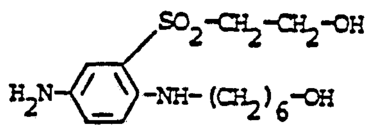 | " |
| 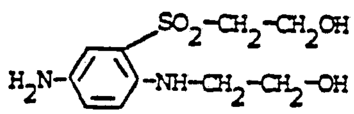 | 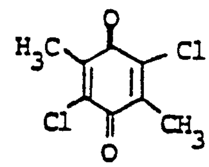 |
| 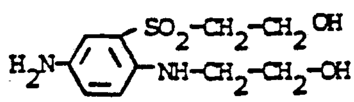 | 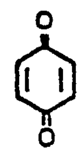 |
| " | 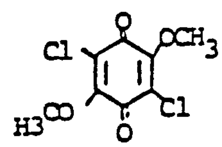 |
| " | 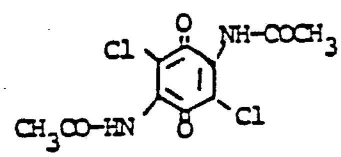 |
| " | 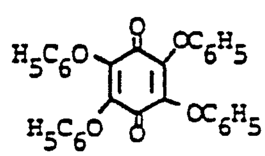 |
| " | 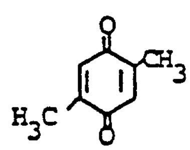 |
| " | 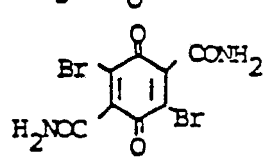 |

(Fortsetzung)

| Ausgangsverbindungen V | Benzochinon IV |
|---|---|
| " | 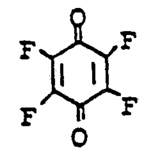 |
| " | 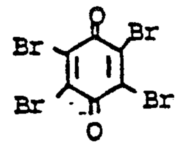 |

Beispiel 3

[5-Amino-2(2-hydroxyethyl) aminophenyl] (2-hydroxyethyl)-sulfon

209 g feuchte Paste an Natrium-2-Chlor-5-nitrobenzolsulfinat (58,4 %ig) werden in 250 ml Wasser gelöst. Der pH sollte zwischen 7 und 8 liegen. Das Reaktionsgefäß wird mit Stickstoff gespült, und die Lösung dabei auf 60 °C erwärmt. Unter Einhaltung der vorgeschriebenen Sicherheitsbestimmungen wird bei pH 7-9 und geschlossenem Reaktionsgefäß langsam Ethylenoxid eingeleitet und 25 %ige Schwefelsäure zudosiert. Es werden insgesamt 110 bis 120 g Ethylenoxid und ca. 204 g Schwefelsäure zur pH-Steuerung verbraucht. Sobald kein Ausgangsmaterial mehr nachweisbar ist, wird bei pH 7 eine Stunde auf 85 °C erwärmt und die Apparatur anschließend mit Stickstoff gespült. Nach dem Abkühlen auf Raumtemperatur wird abgesaugt, mit ca. 200 ml Wasser nachgewaschen und in Vak. bei 70 °C getrocknet. Es werden 118 g kristallines (2-Chlor-5-nitrophenyl) (2-hydroxyethyl) sulfon isoliert.

93 g (2-Chlor-5-nitrophenyl) (2-hydroxyethyl) sulfon werden in 84 ml Isopropanol zum Sieden erhitzt. Unter verminderter Wärmezufuhr werden innerhalb von 15 Minuten 50 g Ethanolamin zulaufen lassen. Die resultierende dichflüssige Lösung wird eine weitere Stunde unter Rückfluß erhitzt. Danach ist die Reaktion beendet und die Lösung des [2-(2-Hydroxyethyl) amino-5-nitrophenyl] (2-hydroxyethyl) sulfons kann direkt katalytisch hydriert werden. Zur Isolierung des Substitutionsproduktes fügt man bei 95-80 °C 250 ml Wasser und 100 g Eis zu. Es wird 2 Stunden nachgerührt und mit 12 ml Salzsäure auf pH6 gestellt. Das kristallin ausgefallene Produkt wird abgesaugt und getrocknet. Die Ausbeute an [2-(2-Hydroxyethyl) amino-5-nitrophenyl] (2-hydroxyethyl) sulfon (Schmp. 118 °C) beträgt 98,5 g.

$^1$H-NMR : τ = 1,59 (d, 1H) ; 1.75 (dd, 1H) ; 2.69 (t, NH) ; 2.97 (d, 1H) ; 5.04 (t, OH) ; 5.13 (t, OH) ; 6.26 (m, 2H) ; 6.35 (m, 2H) ; 6.48 (m, 2H) ; 6.57 (m, 2H).

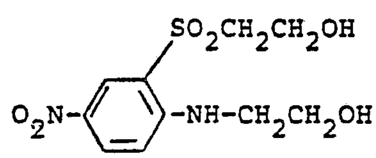

(Alle in dieser Anmeldung aufgeführten $^1$H-NMR-Daten wurden in $d_6$-DMSO als Lösungsmittel bei TMS als innerem Standard ermittelt.)

Das obige zwischenisolierte Aminonitrosulfon kann, wie unter Beispiel 1 beschrieben, katalytisch hydriert werden. Günstiger ist es aber — wie oben bereits angedeutet — die Reaktionslösung der Ethanolamin-Substitution direkt, d. h. ohne Zwischenisolierung des [2-(2-Hydroxyethyl) amino-5-nitrophenyl] (2-hydroxyethyl) sulfon, zu reduzieren. Dazu verdünnt man mit 100 ml Isopropanol, fügt 5 g Raney-Nickel zu, erwärmt auf 60 °C und drückt ca. 24 l Wasserstoff auf. Der Wasserstoffdruck sollte im Bereich von 7-10 bar gehalten werden. Wenn nach ca. 2,5 Stunden der Verbrauch langsam abfällt, kann die Temperatur auf 75 °C gesteigert werden. Nach Reaktionsende wird mit 200 ml 70 °C heißem Wasser verdünnt und die warme Reaktionslösung vom Katalysator abgetrennt. Die erhaltene dunkle Lösung des [5-Amino-2-(2-hydroxyethyl) aminophenyl] (2-hydroxyethyl) sulfons wird direkt mit Chloranil weiter umgesetzt (s. Beispiel 1).

Zur Isolierung und Charakterisierung des Reduktionsproduktes wird die warme Lösung bis auf 200 ml aufkonzentriert, auf 20 °C abgekühlt, und das kristalline Produkt abgesaugt. Nach dem Trocknen bei 70 °C im Vak. resultieren 84 g [5-Amino-2-(2-hydroxyethyl) aminophenyl] (2-hydroxyethyl) sulfon (Schmp. 130 °C)

$^1H$-NMR : τ = 3,10 (d, 1H) ; 3.22 (dd, 1H) ; 3.37 (d, 1H) ; 4.45 (t, NH) ; 5.20 (t, OH) ; 5.27 (t, OH) ; 5.32 (s, $NH_2$) ; 6.40 (m, 4H) : 6.65 (t, 2H) ; 6.90 (m, 2H).

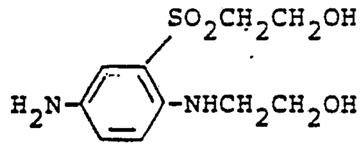

Das als Zwischenprodukt benötigte [2-(2-Hydroxyethyl)-amino-5-nitrophenyl] (2-hydroxyethyl) sulfon kann auch folgendermaßen hergestellt werden :

A) Die Lösung von 122 g Natrium-2-chlor-5-nitro-benzolsulfinat in 300 ml Wasser wird mit 100 g Ethanolamin versetzt und 4 Stunden im Autoklaven bei 110 °C und 0,5 bar gerührt. Die erkaltete gelbe Reaktionslösung wird mit Salzsäure neutralisiert und mit 90 g Kochsalz ausgesalzen. Man erhält 215 g feuchte Paste an Natrium-2-(2-Hydroxyethyl) amino-5-nitrobenzolsulfinat.

B) 122 g Natrium-2-chlor-5-nitrobenzolsulfinat werden mit 150 g Ethanolamin verknetet und langsam auf 100 °C erwärmt. Nach weiteren 30 Minuten bei 100 °C versetzt man mit 500 ml Wasser, neutralisiert die Reaktionslösung mit Salzsäure und isoliert das Natrium-2-(2-hydroxyethyl) amino-5-nitrobenzolsulfinat wie oben durch Aussalzen.

Die 215 g feuchte Paste des Sulfinats werden in 250 ml Wasser gelöst und analog dem Natrium-2-chlor-5-nitrobenzolsulfinat mit 120 g Ethylenoxid und ca. 200 g 25 %iger Schwefelsäure bei 60 °C unter Druck alkyliert. Es werden 121 g kristallines blaßgelbes [2-(2-Hydroxyethyl) amino-5-nitrophenyl] (2-hydroxyethyl) sulfon erhalten.

Verwendet man wie in Beispiel 3 anstelle von Ethanolamin die entsprechenden anderen Hydroxyalkylamine, so lassen sich folgende Nitroamino- bzw. Diaminosulfone herstellen :

Beispiel 4

[2-(2-Hydroxyethyl) methylamino-5-nitrophenyl] (2-hydroxyethyl) sulfon (blaßgelb, Schmp. 106 °C)

$^1H$-NMR : τ = 1.41 (d, 1H) ; 1.63 (dd, 1H) ; 2.41 (d, 1H) ; 5.30 (t, OH) ; 5.39 (t, OH) ; 6.20 (t, 2H) ; 6.37 (m, 4H) ; 6.70 (t, 2H) ; 7.08 (s, $CH_3$).

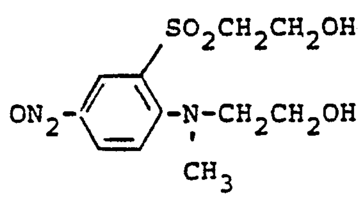

[5-Amino-2-(2-hydroxyethyl) methylaminophenyl] (2-hydroxyethyl) sulfon (kristallierendes Öl)

$^1H$-NMR : τ = 2.82 (d, 1H) ; 2.96 (d, 1H) ; 3.21 (dd, 1H) ; 4.62 (s, $NH_2$) ; 5.25 (breites OH) ; 5.68 (breites OH) ; 6.25 (m, 2H) ; 6.37 (m, 2H) ; 6.50 (t, 2H) ; 7.12 (t, 2H) ; 7.42 (s, $CH_3$).

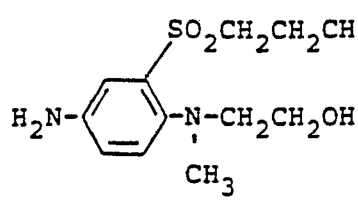

Beispiel 5

[2-(3-Hydroxypropyl) amino-5-(nitrophenyl)] (2-hydroxyethyl) sulfon (blaßgelb, Schmp. 65 °C)

$^1H$-NMR : τ = 1.63 (d, 1H) ; 1.81 (dd, 1H) ; 2.72 (breites NH) ; 3.03 (d, 1H) ; 5.07 (t, OH) ; 5.40 (t, OH) ; 6.25 (t, 2H) ; 6.50 (m, 6H) ; 8.20 (m, 2H).

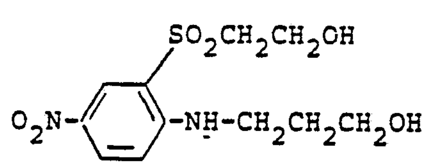

[5-Amino-2-(3-hydroxypropyl) aminophenyl] (2-hydroxyethyl) sulfon (Öl, das kristallisiert)

$^1$H-NMR : τ = 3.12 (d, 1H) ; 3.22 (dd, 1H) ; 3.38 (d, 1H) ; 4.65 (t, NH) ; 5.20 (breites OH) ; 5.31 (s, $NH_2$) ; 5.50 (breites OH) ; 6.37 (t, 2H) ; 6.50 (t, 2H) ; 6.68 (m, 2H) ; 6.90 (m, 2H) ; 8.40 (m, 2H).

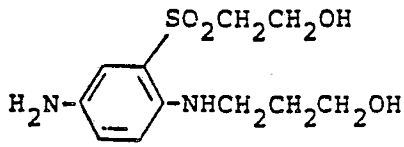

Beispiel 6

[2-(3'-(2''-Hydroxyethyl) methylaminopropyl) amino-5-nitrophenyl] (2-hydroxyethyl) sulfon (gelbes Öl)

$^1$H-NMR : τ = 1.67 (d, 1H) ; 1.82 (dd, 1H) ; 2.63 (breites NH) ; 3.02 (d, 1H) ; 5.10 (breites OH) ; 5.67 (breites OH) ; 6.30 (t, 2H) ; 6.50 (m, 4H) ; 6.62 (t, 2H) ; 7.55 (m, 4H) ; 7.81 (s, $CH_3$) ; 8.25 (m, 2H).

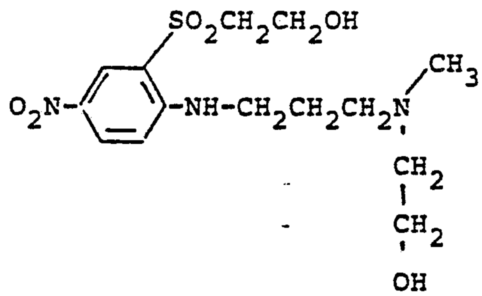

[5-Amino-2-(3'-(2''-hydroxyethyl) methylaminopropyl)-aminophenyl] (2-hydroxyethyl) sulfon (Öl)

$^1$H-NMR : τ = 3.13 (d, 1H) ; 3.22 (dd, 1H) ; 3.38 (d, 1H) ; 4.58 (breites NH) ; 4.95-6.10 (breit, $NH_2$, 2OH) ; 6.36 (t, 2H) ; 6.52 (t, 2H) ; 6.67 (t, 2H) ; 6.92 (m, 2H) ; 7.51 (m, 2H) ; 8.27 (m, 2H).

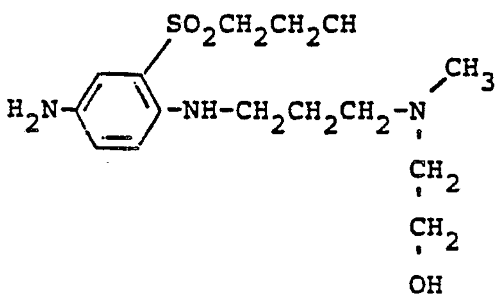

Beispiel 7

[2-(2-Hydroxypropyl) amino-5-nitrophenyl] (2-hydroxyethyl) sulfon (Schmp. 85 °C)

$^1$H-NMR : τ = 1.65 (d, 1H) ; 1.83 (dd, 1H) ; 2.70 (t, NH) ; 3.02 (d, 1H) ; 4.97 (t, OH) ; 5.12 (t, OH) ; 6.10 (m, 1H) ; 6.23 (t, 2H) ; 6.48 (t, 2H) ; 4.60, 4.80 (m, 2H) ; 8.80 (d, 3H).

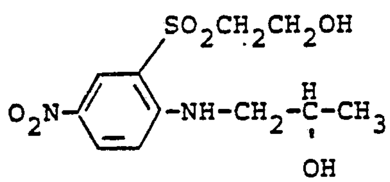

[5-Amino-2-(2-hydroxypropyl) aminophenyl] (2-hydroxyethyl) sulfon (Öl, das kristallisiert)

$^1$H-NMR : τ = 3.08 (d, 1H) ; 3.21 (dd, 1H) ; 3.38 (d, 1H) ; 4.41 (t, NH) ; 5.21 (breites m, $NH_2$, 2OH) ; 6.15 (m, 1H) ; 6.36 (t, 2H) ; 6.63 (t, 2H) ; 6.90, 7.10 (m, 2H) ; 8.83 (d, 3H).

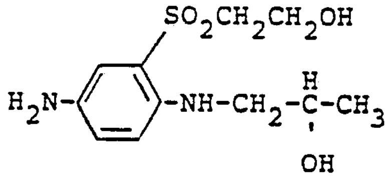

Beispiel 8

[5-Amino-2-(2-hydroxy) ethoxyphenyl] (2-hydroxyethyl) sulfon

136 g Natrium-2-(hydroxy) ethoxy-5-nitrobenzolsulfinat werden in 250 ml Wasser gelöst. Der pH wird auf 7 bis 8 eingestellt. Das Reaktionsgefäß wird auf Dichtigkeit überprüft und mit Stickstoff gespült. Währendessen erwärmt man die Lösung auf 60 °C. Das Reaktionsgefäß wird geschlossen und bei konstantem pH 7-9 werden innerhalb von 4-5 Stunden 110-120 g Ethylenoxid eingeleitet. Der pH wird durch kontinuierliche Zugabe von insgesamt 200 g 25 %iger Schwefelsäure konstant gehalten. Ist im Dünnschichtchromatogramm kein Ausgangssulfinat mehr nachweisbar, wird bei pH 7 eine Stunde auf 85 °C erwärmt und die Apparatur anschließend mit Stickstoff gespült. Beim Abkühlen kristallisiert das blaßgelbe Reaktionsprodukt aus ; es wird abgesaugt, mit wenig Wasser gewaschen und getrocknet. Die Ausbeute an [2-(2-Hydroxy) ethoxy-5-nitrophenyl] (2-hydroxyethyl) sulfon beträgt 132 g.

$^1$H-NMR : $\tau$ = 1.57 (d, 1H) ; 1.65 (dd, 1H) ; 2.32 (d, 1H) ; 5.25 (breites s, 2OH) ; 6.25 (m, 4H) ; 6.78 (m, 4H) ;

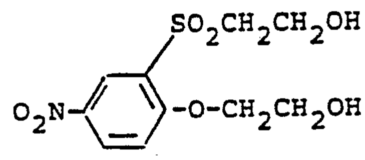

117 g (2-Hydroxy) ethoxy-5-nitrophenyl] (2-hydroxyethyl) sulfon werden in 250 ml Methanol gelöst, mit 5 g Raney-Nickel versetzt und auf 60 °C erwärmt. Danach werden 34 l Wasserstoff aufgedrückt und bis Ende der Aufnahme die Temperatur bei 60 °C konstant gehalten. Die abgekühlte Lösung wird vom Katalysator abgetrennt und kann direkt mit Chloranil weiter umgesetzt werden. Zur Isolierung und Charakterisierung destilliert man das Lösungsmittel ab. Es bleiben 102 g [5-Amino-2-(2-hydroxy) ethoxyphenyl] (2-hydroxyethyl) sulfon als zähes Öl zurück.

$^1$H-NMR : $\tau$ = 2.64 (d, 1H) ; 2.79 (d, 1H) ; 3.12 (dd, 1H) ; 4.32 (s, $NH_2$) ; 5.17 (breites OH) ; 5.28 (breites OH) ; 6.44 (m, 4H) ; 6.62 (t, 2H) ; 7.15 (t, 2H).

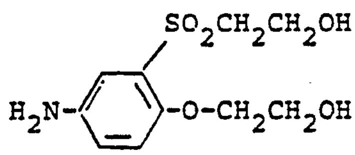

Beispiel 9

[5-Amino-2-(2-hydroxyethyl) mercaptophenyl] (2-hydroxyethyl) sulfon

93 g (2-Chlor-5-nitrophenyl) (2-hydroxyethyl) sulfon werden in 200 ml Isopropanol mit 50 g fester Soda und 70 g Mercaptoethanol für 6 Stunden unter Rückfluß erwärmt. Die Reaktionsmischung wird bei 50 °C von den ausgefallenen Salzen abgetrennt. Die Lösung kann in dieser Form direkt reduziert werden. Zur Isolierung engt man die Lösung am Rotationsverdampfer ein, behandelt den Rückstand mit 300 ml Wasser und saugt den kristallinen Niederschlag ab. Nach dem Trocknen erhält man 91 g [2-(2-Hydroxyethyl) mercapto-5-nitrophenyl] (2-hydroxyethyl) sulfon vom Schmp. 109 °C.

$^1$H-NMR : $\tau$ = 1.43 (d, 1H) ; 1.63 (dd, 1H) ; 2.12 (d, 1H) ; 4.90 (t, OH) ; 5.19 (t, OH) ; 6.25 (m, 6H) ; 6.67 (t, 2H).

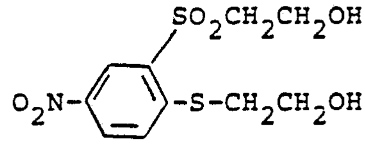

Obige Reaktionslösung wird mit 5 g Raney-Nickel versetzt und wie für die entsprechende Sauerstoffverbindung unter Beispiel 8 beschrieben mit Wasserstoff reduziert. Es werden 94 g [5-Amino-2-(2-hydroxyethyl)-mercaptophenyl] (2-hydroxyethyl) sulfon als zähes, etwas dunkel gefärbtes Öl isoliert.

$^1$H-NMR : $\tau$ = 2.67 (d, 1H) ; 2.83 (d, 1H) ; 3.25 (dd, 1H) ; 4.34 (s, $NH_2$) ; 5.22 (breites s, 2OH) ; 6.32 (m, 4H) ; 6.50 (t, 2H) ; 7.07 (t, 2H).

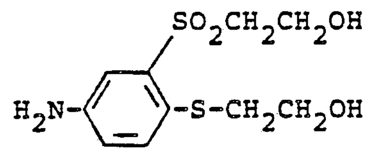

**Patentansprüche**

1. Triphendioxazinfarbstoffe der allgemeinen Formel

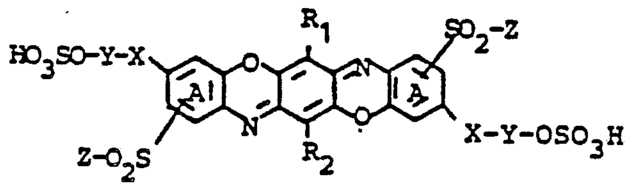

worin

$R_1$, $R_2$ = H, F, Cl, Br, $C_1$-$C_4$-Alkyl, $C_1$-$C_4$-Alkoxy, ggfs. substituiertes Phenoxy, Acylamino, ggfs. substituiertes Carbonamido,

X = $NR_3$, O, S,

$R_3$ = H, gegebenenfalls substituiertes $C_1$-$C_4$-Alkyl,

Y = $C_2$-$C_6$-Alkylen, gegebenenfalls substituiert oder durch Heteroatome in der Alkylenkette unterbrochen,

Z = $—CH=CH_2$ oder $—CH_2—CH_2—W$ worin

W = ein unter Bildung der Gruppe $—CH=CH_2$ abspaltbarer Rest, beispielsweise $—OSO_3H$, $—SSO_3H$ oder $—OPO_3H_2$, —O-Acyl, insbesondere —O—$C_1$-$C_4$-Alkylcarbonyl, wobei die Ringe A gegebenenfalls weitere übliche Substituenten aufweisen können.

2. Farbstoffe der Formel

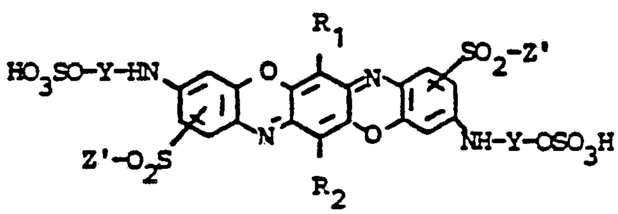

worin

$R_1$, $R_2$ und Y die oben angegebene Bedeutung haben und

Z' $—CH_2—CH_2—OSO_3H$ oder $—CH=CH_2$,

bedeutet.

3. Farbstoffe der Formel

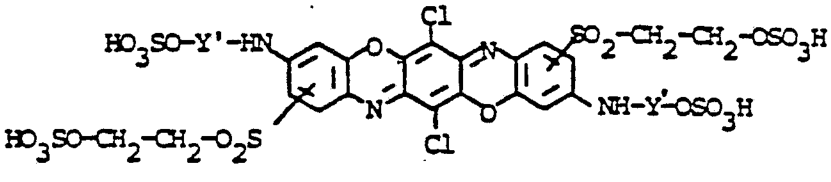

worin Y' $C_2$-$C_4$-Alkylen bedeutet.

4. Verfahren zur Herstellung von Farbstoffen des Anspruchs 1, dadurch gekennzeichnet, daß man Verbindungen der Formel

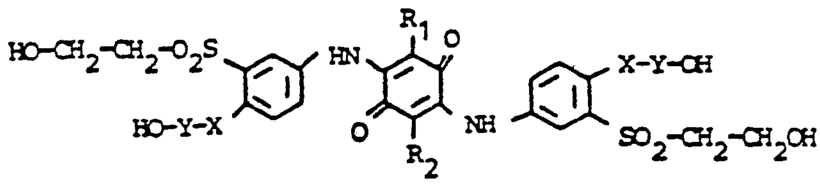

einer Ringschlußreaktion in stark saurem Medium unterwirft und anschließend gegebenenfalls die Gruppen $-SO_2CH_2CH_2OSO_3H$ in Gruppen $-SO_2-CH=CH_2$ oder $-SO_2CH_2CH_2W$ umwandelt.

5. Verwendung der Farbstoffe der Ansprüche 1 bis 3 zum Färben und Bedrucken von Cellulosematerialien sowie natürlichen und synthetischen Polyamidmaterialien.

**Claims**

1. Triphendioxazine dyestuffs of the general formula

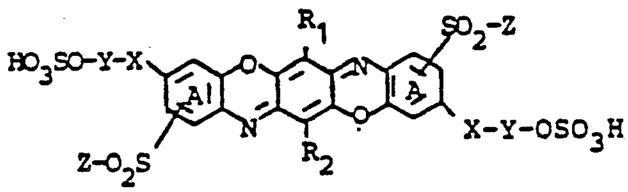

wherein

$R_1$, $R_2$ = H, F, Cl, Br, $C_1$-$C_4$-alkyl, $C_1$-$C_4$-alkoxy, optionally substituted phenoxy, acylamino, or optionally substituted carboxamido,

X = $NR_3$, O or S,

$R_3$ = H or optionally substituted $C_1$-$C_4$-alkyl,

Y = $C_2$-$C_6$-alkylene which is optionally substituted or interrupted in the alkylene chain by hetero atoms,

Z = $-CH=CH_2$ or $-CH_2-CH_2-W$ wherein

W = a detachable radical whose detachment is accompanied by the formation of the $-CH=CH_2$ group, for example $-OSO_3H$, $-SSO_3H$ or $-OPO_3H_2$, or $-O$-acyl, in particular $-O$-$C_1$-$C_4$-alkylcarbonyl, and the rings A can optionally have further customary substituents.

2. Dyestuffs of the formula

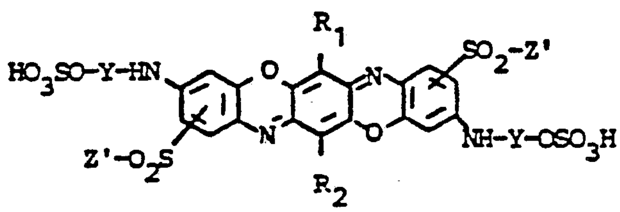

wherein

$R_1$, $R_2$ and Y have the meaning given above and

Z' denotes $-CH_2-CH_2-OSO_3H$ or $-CH=CH_2$.

3. Dyestuffs of the formula

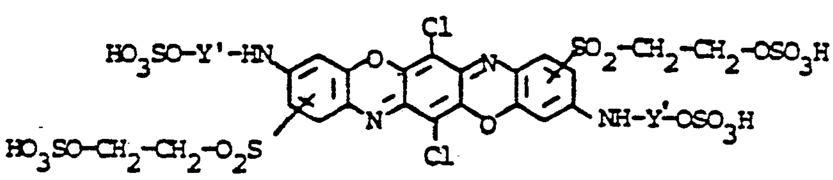

wherein Y' denotes $C_2$-$C_4$-alkylene.

4. Process for preparing dyestuffs of Claim 1, characterised in that compounds of the formula

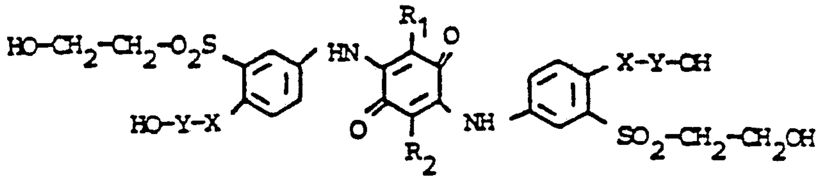

are subjected to a ring closure reaction in a strongly acid medium and, if desired, the $-SO_2CH_2CH_2OSO_3H$ groups are then converted into $-SO_2-CH=CH_2$ or $-SO_2CH_2CH_2W$ groups.

5. Use of the dyestuffs of Claims 1 to 3 for dyeing and printing cellulose materials and natural and synthetic polyamide materials.

**Revendications**

1. Colorants de triphénodioxazine de formule générale :

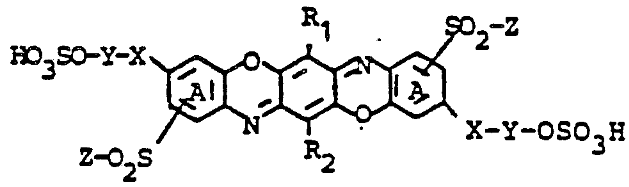

dans laquelle

$R^1$, $R^2$ = H, F, Cl, Br, un groupe alkyle en $C_1$-$C_4$, un groupe alcoxy en $C_1$-$C_4$, un groupe phénoxy éventuellement substitué, un groupe acylamino ou un groupe carbonamido éventuellement substitué,

X = $NR^3$, O, S,

$R^3$ = H, un groupe alkyle en $C_1$-$C_4$ éventuellement substitué,

Y = un groupe alkylène en $C_2$-$C_6$, éventuellement substitué ou interrompu par des hétéro-atomes dans la chaîne alkylène,

Z = $-CH=CH_2$ ou $-CH_2-CH_2-W$ où

W = un radical dissociable avec formation du groupe $-CH=CH_2$, par exemple, $-OSO_3H$, $-SSO_3H$ ou $-OPO_3H_2$, un groupe —O-acyle, en particulier, un groupe —O-alkyl (en $C_1$-$C_4$) carbonyle, les noyaux A pouvant éventuellement comporter d'autres substituants habituels.

2. Colorants de formule :

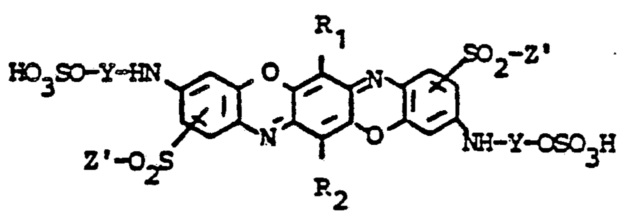

dans laquelle

$R^1$, $R^2$ et Y ont les significations indiquées ci-dessus, et

Z' représente $-CH_2-CH_2-OSO_3H$ ou $-CH=CH_2$.

3. Colorants de formule :

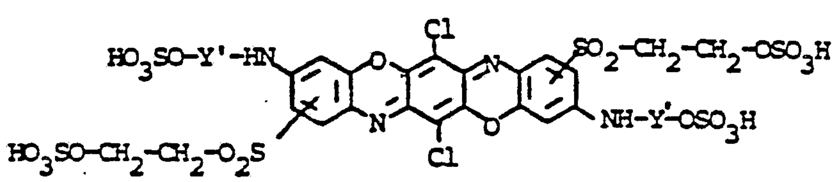

dans laquelle Y' représente un groupe alkylène en $C_2$-$C_4$.

4. Procédé de préparation de colorants selon la revendication 1, caractérisé en ce qu'on soumet des composés de formule :

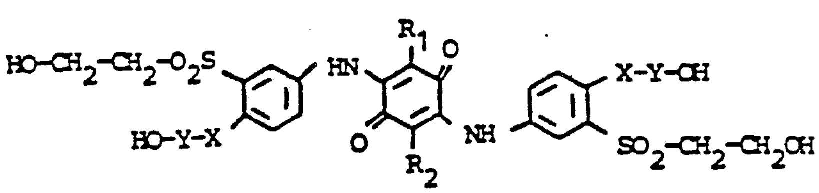

à une réaction de cyclisation dans un milieu fortement acide, puis on transforme éventuellement les groupes $-SO_2CH_2CH_2OSO_3H$ en groupes $-SO_2-CH=CH_2$ ou $-SO_2CH_2CH_2W$.

5. Utilisation des colorants selon les revendications 1 à 3 pour la teinture et l'impression de matières cellulosiques, ainsi que de matières de polyamides naturelles et synthétiques.